# FASCICULE DE BREVET EUROPEEN

(11) **EP 3 455 099 B1**
(45) Date de publication et mention de la délivrance du brevet: **15.02.2023**
(21) Numéro de dépôt: 17722816.0
(22) Date de dépôt: 12.05.2017
(51) Int. Cl.: B60L 3/00, B60L 7/02, B61D 17/20, B61D 13/00, B61G 5/10, H02G 11/00, B60R 16/02

(54) **VÉHICULE À MOTEUR ÉLECTRIQUE À FAIBLE RAYONNEMENT ÉLECTROMAGNÉTIQUE**
ELEKTROMOTORFAHRZEUG MIT GERINGER ELEKTROMAGNETISCHER STRAHLUNG
LOW-ELECTROMAGNETIC RADIATION ELECTRIC MOTOR VEHICLE

(30) Priorité: 12.05.2016 FR 1654248
(43) Date de publication de la demande: 20.03.2019
(73) Titulaire: ALSTOM Transport Technologies, 93400 Saint-Ouen (FR)
(72) Inventeur: BASSET, Frédéric, 65601 Semeac cedex (FR); KOCH, Delphine, 17440 Aytre (FR); BELLOMO, Jean-Philippe, 65000 Tarbes (FR); DUBREUIL, Fabien, 65000 Tarbes (FR)
(74) Mandataire: Lavoix
(86) Numéro de dépôt international: PCT/EP2017/061521
(87) Numéro de publication internationale: WO 2017/194765

(56) Documents cités:
- EP-A1- 1 433 650
- EP-A1- 2 546 120
- WO-A1-2013/052340
- JP-A- 2001 231 112
- JP-A- 2005 267 873
- JP-A- 2009 148 038
- US-A- 3 829 603
- US-A1- 2010 097 023

## Description

La présente invention concerne un véhicule à moteur électrique du type comprenant :
- un convertisseur de puissance,
- un équipement de consommation électrique,
- des moyens de connexion électrique entre le convertisseur de puissance et l'équipement de consommation électrique, et
- des moyens de protection en mode commun.

Dans un véhicule à moteur électrique, le coffre de traction comprend un convertisseur de puissance, alimentant un équipement de consommation électrique, par exemple un frein rhéostatique pour un véhicule ferroviaire ou un moteur pour les autres types de véhicule, notamment les véhicules de transport terrestre électrique non-guidé. Le convertisseur de puissance et l'équipement de consommation électrique sont généralement situés dans des endroits éloignés, de sorte qu'une connexion électrique est nécessaire pour assurer leur liaison.

Dans le cas d'un véhicule ferroviaire, le convertisseur de puissance, de type hacheur, et le frein rhéostatique peuvent être situés dans des voitures successives, de sorte que la connexion électrique assure leur liaison au passage entre deux voitures.

Dans le cas d'un véhicule électrique non-guidé, par exemple un bus, le convertisseur de puissance, de type onduleur par exemple, est situé en toiture et le moteur électrique est situé dans une structure sous-caisse, de sorte que la connexion électrique assure leur liaison entre ces extrémités du véhicule.

La liaison entre le convertisseur de puissance et l'équipement de consommation électrique est généralement assurée par des câbles blindés, dont le blindage est raccordé à ses extrémités à une masse du coffre de traction et à une masse de l'équipement de consommation électrique. Ainsi, le blindage évite le rayonnement électromagnétique des câbles.

Un des problèmes techniques qui se posent est la dégradation de la connexion du blindage des câbles aux masses. En effet, lors de leur utilisation, de tels câbles blindés se dégradent par usure mécanique et par corrosion. Le blindage des câbles n'est alors plus connecté à la masse à ses deux extrémités et la protection électromagnétique perd ainsi son efficacité dès lors que les courants de mode commun ne se rebouclent plus par le blindage des câbles. Comme le coffre de traction et l'équipement de consommation électrique ne sont pas localisés aux mêmes endroits, la zone située entre les deux est alors soumise à un champ magnétique d'une intensité incompatible avec les normes de protection requises.

Or, cette zone est, dans la plupart des tramways ou des bus électriques articulés par exemple, un couloir de passage permettant une intercirculation intégrale entre les voitures du véhicule. Dans le cas d'un bus électrique non-articulé, cette zone est en contact avec la zone occupée par les passagers. Ce défaut expose donc dangereusement les passagers aux radiations d'un champ électromagnétique mettant en jeu leur sécurité.

Le document WO 2013/052340 A décrit un exemple de véhicule ferroviaire comprenant un convertisseur-inverseur connecté à un moteur via des câbles moteur et une plaque métallique. Le document JP 2009 148038 A décrit un exemple de véhicule ferroviaire comprenant un convertisseur et un équipement de consommation électrique. Le document US 2010/097023 A1 décrit un exemple de câble électrique de puissance. Le document EP 1433650 A1 décrit un exemple de dispositif de mise à la terre d'un véhicule ferroviaire. Le document US 3 829 603 décrit encore un autre exemple de câble de puissance.

Le but de l'invention est de fournir un véhicule à moteur électrique améliorant la durée de vie de la connexion entre le coffre de traction et l'équipement de consommation électrique.

A cet effet, l'invention a pour objet un véhicule à moteur électrique selon la revendication 1.

Suivant des modes particuliers de réalisation, le véhicule à moteur électrique selon l'invention présente l'une ou plusieurs des caractéristiques des revendications 2 à 7.

L'invention sera mieux comprise à l'aide de la description qui va suivre, donnée uniquement à titre d'exemple non limitatif et faite en se référant aux dessins annexés sur lesquels :
- la figure 1 est une vue de dessus d'un véhicule à moteur électrique selon l'invention, de type rame de tramway ; et
- la figure 2 est une représentation schématique des moyens de connexion et des moyens de protection en mode commun embarqués dans un véhicule à moteur électrique selon l'invention.

L'invention concerne tout type de véhicule à moteur électrique, notamment tout type de véhicule de transport, par exemple un véhicule de transport guidé sur fer ou sur pneu, ou non-guidé.

On entend par véhicule de transport terrestre guidé sur fer tout véhicule ferroviaire de type urbain, par exemple un tramway, de type suburbain, par exemple une rame de métro, de type banlieue, régional ou des véhicules ferroviaire à grandes vitesses ou très grandes vitesses.

On entend par transport terrestre guidé sur pneus tout véhicule terrestre utilisant des pneumatiques, par exemple de type rame de métro à pneumatiques, tramway à pneumatiques, ou encore tout type de véhicule terrestre électrique ou hybride de type bus, camion, ou voiture.

On entend par transport terrestre non-guidé tout type de transport terrestre électrique ou hybride de type bus, camion ou voiture.

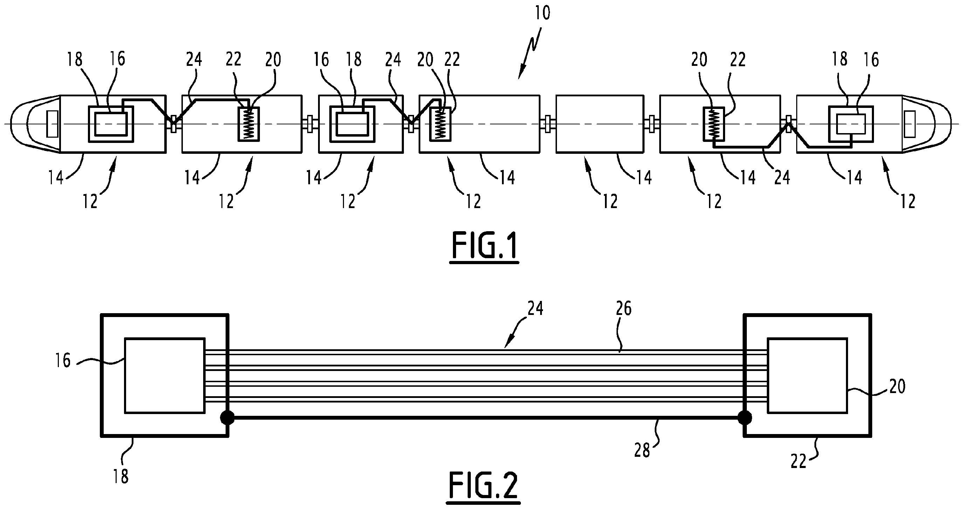

Selon un premier exemple illustré sur la figure 1, le véhicule 10 est une rame de tramway à freinage électrodynamique, comportant plusieurs voitures 12 successives et articulées les unes aux autres. Les voitures comprennent chacune une caisse 14 portée par des roues.

Les voitures motrices comportent un moteur électrique (non représenté) propre à assurer la mise en mouvement du véhicule. Le moteur est relié pour son alimentation à un convertisseur de puissance 16, par exemple un hacheur, contenu dans un coffre de traction 18 implanté en toiture, par exemple, dans la même voiture que celle du moteur.

Le convertisseur de puissance 16 est propre à faire varier la vitesse du moteur qui met en mouvement la voiture de la rame.

Le convertisseur de puissance 16 possède une masse formée par le coffre de traction 18. Par masse on entend notamment masse électrique.

Le coffre de traction 18 est avantageusement relié électriquement à la caisse 14 de la voiture portant le coffre de traction 18.

Un équipement de consommation électrique 20, par exemple un frein rhéostatique, ou rhéostat, est installé sur un bâti métallique 22 fixé en toiture sur la voiture adjacente à la voiture comportant le coffre de traction 18.

L'équipement de consommation électrique 20 possède également une masse formée par le bâti métallique 22.

Le bâti métallique 22 est avantageusement relié électriquement à la caisse 14 de la voiture portant le bâti métallique 22.

L'équipement de consommation électrique 20 est relié électriquement au convertisseur de puissance 16 pour dissiper en chaleur l'énergie électrique produite par le moteur en phase de freinage.

Selon un second exemple (non représenté), le véhicule 10 est un bus électrique articulé comportant deux voitures 12 successives et articulées l'une à l'autre. Les voitures comprennent chacune une caisse 14 portée par des roues.

Le véhicule 10 comporte un équipement de consommation électrique 20, de type moteur électrique, propre à assurer la mise en mouvement du véhicule 10. Le moteur est relié pour son alimentation à un convertisseur de puissance 16, de type onduleur par exemple, contenu dans un coffre de traction 18 implanté en toiture, par exemple dans une voiture différente de celle du moteur électrique.

Le convertisseur de puissance 16 est propre à faire varier la vitesse du moteur qui met en mouvement le véhicule 10.

Le convertisseur de puissance 16 possède une masse formée par le coffre de traction 18. Par masse on entend notamment masse électrique.

Le coffre de traction 18 est avantageusement relié électriquement à la caisse 14 d'une des voitures 12 du bus électrique.

L'équipement de consommation électrique 20, le moteur dans cet exemple, est installé sur un bâti métallique 22 dans une structure en sous-caisse sur la voiture adjacente à la voiture comportant le coffre de traction 18.

L'équipement de consommation électrique 20 possède également une masse formée par le bâti métallique 22.

Le bâti métallique 22 est avantageusement relié électriquement à la caisse 14 de la voiture adjacente à la voiture comportant le coffre de traction 18.

L'équipement de consommation électrique 20 est relié électriquement au convertisseur de puissance 16 pour son alimentation, en courant alternatif dans cet exemple.

Selon un troisième exemple (non représenté), le véhicule 10 est un bus électrique non-articulé comprenant une unique caisse 14 portée par des roues.

Le véhicule 10 comporte un équipement de consommation électrique 20, de type moteur électrique, propre à assurer la mise en mouvement du véhicule 10. Le moteur est relié pour son alimentation à un convertisseur de puissance 16, de type onduleur par exemple, contenu dans un coffre de traction 18 implanté en toiture.

Le convertisseur de puissance 16 est propre à faire varier la vitesse du moteur qui met en mouvement le véhicule 10.

Le convertisseur de puissance 16 possède une masse formée par le coffre de traction 18. Par masse on entend notamment masse électrique.

Le coffre de traction 18 est avantageusement relié électriquement à la caisse 14 du bus électrique.

L'équipement de consommation électrique 20, le moteur dans cet exemple, est installé sur un bâti métallique 22 dans une structure en sous-caisse.

L'équipement de consommation électrique 20 possède également une masse formée par le bâti métallique 22.

Le bâti métallique 22 est avantageusement relié électriquement à la caisse 14 du bus électrique.

L'équipement de consommation électrique 20 est relié électriquement au convertisseur de puissance 16 pour son alimentation, en courant alternatif dans cet exemple.

Comme illustré par la figure 2, le véhicule 10 selon l'invention, comporte des moyens 24 de connexion entre le convertisseur de puissance 16 et l'équipement de consommation électrique 20. Les moyens de connexion 24 sont des conducteurs électriques de phase 26. Ils sont, par exemple, formés d'un ou plusieurs câbles électriques constitués chacun d'une âme conductrice recouverte d'une gaine isolante. La liaison est assurée par un nombre de câbles compris entre 1 et 5, et avantageusement égal à 4.

Les conducteurs électriques de phase 26 sont dépourvus de blindage électriquement conducteur.

Le véhicule 10 comporte également des moyens de protection en mode commun 28 dont le but est d'améliorer les performances de compatibilité électromagnétique (CEM) des moyens de connexion 24 en assurant l'équipotentialité entre le coffre de traction 18 et le bâti métallique 22.

Les moyens de protection en mode commun 28 sont constitués d'un ou plusieurs conducteurs électriques d'accompagnement de masse cheminant à proximité des conducteurs électriques de phase 26.

Chaque conducteur électrique d'accompagnement de masse est dépourvu de blindage électriquement conducteur.

Chaque conducteur électrique d'accompagnement de masse est une tresse métallique ou un câble électrique.

Dans un premier mode de réalisation de l'invention présenté à la figure 2, chaque conducteur électrique d'accompagnement de masse relie la masse du convertisseur de puissance 16 à la masse de l'équipement de consommation électrique 20, c'est-à-dire qu'il relie notamment le coffre de traction 18 au bâti métallique 22. En d'autres termes chaque conducteur électrique d'accompagnement de masse relie la masse électrique du convertisseur de puissance 16 à la masse électrique de l'équipement de consommation électrique 20.

Dans le premier mode de réalisation de l'invention, chaque conducteur électrique d'accompagnement de masse est connecté par une extrémité sur le coffre de traction 18 contenant le convertisseur de puissance 16 et par l'autre extrémité au bâti métallique 22 supportant l'équipement de consommation électrique 20.

Dans un deuxième mode de réalisation (non couvert par les revendications) , non représenté sur les figures et applicable à tout type de véhicule terrestre comprenant plusieurs voitures, comme la rame de tramway illustrée en figure 1 et le bus articulé, chaque conducteur électrique d'accompagnement de masse est connecté par une extrémité sur la caisse 14 de la voiture 12 portant le coffre de traction 18 et par l'autre extrémité sur la caisse 14 de la voiture 12 portant le bâti métallique 22 et assure un pontage électrique entre les deux caisses 14.

Dans le deuxième mode de réalisation, le coffre de traction 18 est avantageusement relié électriquement à la caisse 14 de la voiture 12 portant le coffre de traction 18 et le bâti métallique 22 est avantageusement relié électriquement à la caisse 14 de la voiture 12 portant le bâti métallique 22.

Dans les deux modes de réalisation, chaque conducteur électrique d'accompagnement de masse chemine le plus près possible des conducteurs électriques de phase 26 et avantageusement sur toute la longueur des conducteurs électriques de phase. Avantageusement, les conducteurs électriques d'accompagnement de masse et les conducteurs électriques de phases forment un faisceau entre les caisses 14.

Les conducteurs électriques de phase 26 et les conducteurs d'accompagnement de masse 28 sont positionné à une hauteur supérieure à 80%, de préférence supérieure à 90% de la hauteur des caisses 14.

La distance séparant les conducteurs 26 des conducteurs d'accompagnement de masse 28 est inférieure à 1 mètre, de préférence à 50 cm et de préférence encore à 20 cm.

La présence proche des conducteurs de phase 26 et des conducteurs d'accompagnement de masse permet d'assurer l'efficacité de la protection CEM et éviter le retour des modes communs par le plancher du véhicule à moteur électrique.

## Revendications

1. Véhicule (10) à moteur électrique comprenant :
- un convertisseur de puissance (16),
- un équipement de consommation électrique (20),
- des moyens de connexion électrique (24) entre le convertisseur de puissance (16) et l'équipement de consommation électrique (20), et
- des moyens de protection en mode commun (28),
les moyens de connexion électrique (24) entre le convertisseur de puissance (16) et l'équipement de consommation électrique (20) comprennent des conducteur électriques de phase (26) et les moyens de protection en mode commun (28) comprennent des conducteurs électriques d'accompagnement de masse cheminant le long des conducteurs électriques de phase (26),
chaque conducteur électrique d'accompagnement de masse comprenant deux extrémités reliées électriquement respectivement à une masse du convertisseur de puissance (16) et à une masse de l'équipement de consommation électrique (20), chaque conducteur électrique d'accompagnement de masse étant une tresse métallique ou un câble électrique, chaque conducteur électrique d'accompagnement de masse étant dépourvu de blindage électriquement conducteur,
le véhicule (10) comprenant une première voiture (12) et une deuxième voiture (12) comprenant chacune une caisse (14), le convertisseur de puissance (16) étant porté par la première voiture (12), l'équipement de consommation électrique (20) étant porté par la deuxième voiture (12), la première voiture (12) comprenant un coffre de traction (18) intégrant le convertisseur de puissance (16) et la deuxième voiture (12) comprenant un bâti métallique (22) supportant l'équipement de consommation électrique (20), chaque conducteur électrique d'accompagnement de masse reliant le coffre de traction (18) au bâti métallique (22) qui forment chacun une masse,
les conducteurs électriques de phase (26) et les conducteurs d'accompagnement de masse (28) étant positionnés à une hauteur supérieure à 80 % de la hauteur des caisses (14), la distance séparant les conducteurs électriques de phase (26) et les conducteurs d'accompagnement de masse (28) étant inférieure à 1 mètre.

2. Véhicule (10) à moteur électrique selon la revendication 1, dans lequel le coffre de traction (18) et le bâti métallique (22) étant reliés électriquement à la caisse (14) de la voiture (12) les portant.

3. Véhicule (10) à moteur électrique selon la revendication 1 ou 2, dans lequel chaque conducteur électrique de phase (26) et chaque conducteur électrique d'accompagnement de masse forment un faisceau.

4. Véhicule (10) à moteur électrique selon l'une quelconque des revendications précédentes, dans lequel chaque conducteur électrique de phase (26) comprend au moins un câble constitué d'une âme conductrice recouverte d'une gaine isolante.

5. Véhicule (10) à moteur électrique selon l'une quelconque des revendications précédentes, dans lequel chaque conducteur électrique de phase (26) est dépourvu de blindage électriquement conducteur.

6. Véhicule (10) à moteur électrique selon l'une quelconque des revendications précédentes, dans lequel le convertisseur de puissance (16) est un hacheur, et l'équipement de consommation électrique (20) est un rhéostat.

7. Véhicule (10) à moteur électrique selon l'une quelconque des revendications 1 à 5, dans lequel le convertisseur de puissance (16) est un onduleur, et l'équipement de consommation électrique (20) est un moteur électrique.

## Patentansprüche

1. Fahrzeug (10) mit Elektromotor, umfassend:
- einen Leistungswandler (16),
- eine elektrische Verbraucherausrüstung (20),
- elektrische Verbindungseinrichtungen (24) zwischen dem Leistungswandler (16) und der elektrischen Verbraucherausrüstung (20), und
- Schutzeinrichtungen in Gleichtakt (28),
die elektrischen Verbindungseinrichtungen (24) zwischen dem Leistungswandler (16) und der elektrischen Verbraucherausrüstung (20) umfassend elektrische Phasenleiter (26) und die Schutzeinrichtungen in Gleichtakt (28) umfassend elektrische Massebegleitleiter, die entlang der elektrischen Phasenleiter (26) verlaufen,
jeder elektrische Massebegleitleiter umfassend zwei Enden, die jeweils elektrisch mit einer Masse des Leistungswandlers (16) und einer Masse der elektrischen Verbraucherausrüstung (20) verbunden sind, wobei jeder elektrische Massebegleitleiter ein Metallgeflecht oder ein elektrisches Kabel ist, wobei jeder elektrische Massebegleitleiter keine elektrisch leitende Abschirmung aufweist,
das Fahrzeug (10) umfassend einen ersten Wagen (12) und einen zweiten Wagen (12), jeweils umfassend einen Wagenkasten (14), wobei der Leistungswandler (16) von dem ersten Wagen (12) getragen wird und die elektrische Verbraucherausrüstung (20) von dem zweiten Wagen (12) getragen wird, wobei der erste Wagen (12) einen Antriebskasten (18) umfasst, der den Leistungswandler (16) integriert, und der zweite Wagen (12) einen Metallrahmen (22) umfasst, der die elektrische Verbraucherausrüstung (20) trägt, wobei jeder elektrische Massebegleitleiter den Antriebskasten (18) mit dem Metallrahmen (22) verbindet, die jeweils eine Masse bilden,
wobei die elektrischen Phasenleiter (26) und die Massebegleitleiter (28) in einer Höhe von mehr als 80 % der Höhe der Wagenkästen (14) positioniert sind, wobei der Abstand zwischen den elektrischen Phasenleitern (26) und den Massebegleitleitern (28) weniger als 1 Meter ist.

2. Fahrzeug (10) mit Elektromotor nach Anspruch 1, wobei der Antriebskasten (18) und der Metallrahmen (22) elektrisch mit dem Wagenkasten (14) des sie tragenden Wagens (12) verbunden sind.

3. Fahrzeug (10) mit Elektromotor nach Anspruch 1 oder 2, wobei jeder elektrische Phasenleiter (26) und jeder elektrische Massebegleitleiter ein Bündel bilden.

4. Fahrzeug (10) mit Elektromotor nach einem der vorherigen Ansprüche, wobei jeder elektrische Phasenleiter (26) mindestens ein Kabel umfasst, das aus einem leitenden Kern besteht, der mit einem isolierenden Mantel umhüllt ist.

5. Fahrzeug (10) mit Elektromotor nach einem der vorherigen Ansprüche, wobei jeder elektrische Phasenleiter (26) keine elektrisch leitende Abschirmung aufweist.

6. Fahrzeug (10) mit Elektromotor nach einem der vorherigen Ansprüche, wobei der Leistungswandler (16) ein Zerhacker ist und die elektrische Verbraucherausrüstung (20) ein Rheostat ist.

7. Fahrzeug (10) mit Elektromotor nach einem der Ansprüche 1 bis 5, wobei der Leistungswandler (16) ein Wechselrichter ist und die elektrische Verbraucherausrüstung (20) ein Elektromotor ist.

## Claims

1. An electrically powered vehicle (10) comprising:
- a power converter (16),
- a power consumption device (20),
- electrical connection means (24) between the power converter (16) and the power consumption device (20), and
- common-mode protection means (28),
the electrical connection means (24) between the power converter (16) and the power consumption device (20) comprises phase electrical conductors (26) and the common-mode protection means (28) comprises accompanying earth electrical conductors running along the phase electrical conductors (26),
each accompanying earth electrical conductor comprising two ends electrically connected respectively to an earth of the power converter (16) and to an earth of the power consumption device (20), each accompanying earth electrical conductor being a metal braid or an electrical cable, each accompanying earth electrical conductor being free of electrically conductive shielding,
the vehicle (10) comprising a first car (12) and a second car (12) each comprising a body (14), the power converter (16) being carried by the first car (12), the power consumption device (20) being carried by the second car (12) the first car (12) comprising a traction box (18) incorporating the power converter (16) and the second car (12) comprising a metal frame (22) supporting the power consumption device (20), each accompanying earth electrical conductor connecting the traction box (18) to the metal frame (22) which each form an earth,
the electrical phase conductors (26) and the accompanying earth conductors (28) being positioned at a height greater than 80% of the height of the bodies (14), the distance separating the electrical phase conductors (26) and the accompanying earth conductors (28) being less than 1 metre.

2. The electrically powered vehicle (10) according to claim 1, wherein the towing box (18) and the metal frame (22) are electrically connected to the body (14) of the car (12) carrying them.

3. The electrically powered vehicle (10) as claimed in claim 1 or 2, wherein each phase electrical conductor (26) and each accompanying earth electrical conductor form a bundle.

4. The electrically powered vehicle (10) according to any one of the preceding claims, wherein each electrical phase conductor (26) comprises at least one cable consisting of a conductive core covered by an insulating sheath.

5. The electrically powered vehicle (10) according to any one of the preceding claims, wherein each phase electrical conductor (26) is free of electrically conductive shielding.

6. The electrically powered vehicle (10) according to any one of the preceding claims, wherein the power converter (16) is a chopper, and the power consumption device (20) is a rheostat.

7. The electrically powered vehicle (10) according to any one of the preceding claims, wherein the power converter (16) is an inverter, and the power consumption device (20) is an electric motor.
